# EUROPEAN PATENT SPECIFICATION

(11) **EP 3 117 884 B1**
(45) Date of publication and mention of the grant of the patent: **20.10.2021**
(21) Application number: 16275061.6
(22) Date of filing: 22.04.2016
(51) Int. Cl.: B01D 35/02, B01D 29/03, B01D 29/60

(54) **STRAINER AND STRAINER CONTROL SYSTEM**
SIEB UND SIEBSTEUERUNGSSYSTEM
SYSTÈME DE COMMANDE D'UNE CRÉPINE ET UNE TELLE CRÉPINE

(30) Priority: 14.07.2015 US 201514799202; 26.01.2016 US 201615006385
(43) Date of publication of application: 18.01.2017
(73) Proprietor: Neptune Benson, Inc., Coventry RI 02816 (US)
(72) Inventor: Nehlen III, Paul F., Delavan, WI Wisconsin 53115 (US)
(74) Representative: Murgitroyd & Company

(56) References cited:
- JP-A- 2001 017 806
- KR-A- 20100 118 323

## Description

### Field of the Invention

The present invention relates in general to strainers that may be used in such applications as filtration and fluid flow safety. More particularly, the present invention relates to an improved strainer construction as well as an associated control system. Even more particularly, the present invention relates to a method of controlling a strainer element. Still more particularly, the present invention relates to an improved strainer construction as well as an associated control system including valve control for handling fault conditions.

### Background of the Invention

In the field of filtration and fluid flow safety there is relatively common use of a device that is identified as a strainer. The strainer or screening device is used to retain foreign objects. The strainer is usually a fixed position device. It is typical to provide access to the strainer for cleaning the strainer. However, this access is many times not very convenient. Also, the typical strainer device is not suited for the receipt and processing of objects that are the result of an upstream breakage or destruction.

Rotatable strainers are known in the prior art, for example from JP 2001-17806 and KR 10-2010-0118323. It is an object of the present invention to provide an improved screening apparatus in the form of a strainer element, and in which the strainer element is rotatable through 180 degrees in accordance with one mode of operation. This mode of operation enables any foreign objects collected at the strainer to be periodically released.

Another object of the present invention is to provide a control system for controlling a strainer, particularly as to its rotation parameter. The system of the present invention provides an improvement in the overall process so as to maximize the uptime of the process, while simultaneously protecting against any upset or unacceptable event that may occur upstream of the strainer.

Still another object of the present invention is to provide a control system for controlling a strainer element that enables the strainer element, in one mode of operation, to be locked in position so that any foreign objects, debris or detritus is retained at the strainer element for subsequent collection. In accordance with a mode of operation of the control system of the present invention, foreign objects, particularly debris or detritus, may be diverted to a collection receptacle.

A further object of the present invention is to provide a method of controlling a strainer element that is used for the purpose of retaining particulate while permitting the passage of a liquid through the strainer element, and in which control is of, not only the rotation of the strainer element, but also control of valves so as to divert debris or detritus to a collection receptacle.

It is a further object of the present invention to provide an improved screening apparatus in the form of a strainer element, in combination with a control system for detecting the strainer condition, particularly with respect to whether the strainer element has been effectively transitioned to a released state.

### Summary of the Invention

To accomplish the foregoing and other objects, features and advantages of the present invention there is provided a screening apparatus comprising a strainer element disposed in a piping system and used for the purpose of retaining particulate while permitting the passage of a liquid through the strainer element, characterised in that the apparatus comprises a support structure for the strainer element to enable rotation of the strainer element within the support structure between opposed 180 degree positions, a control member comprising an electrical controller coupled with the strainer element for controlling the rotation of the strainer element between the opposed 180 degree positions, said strainer element, in both opposed 180 degree positions thereof impeding any particulate while permitting the passage of a liquid, said control member having a first state in which rotation of the strainer element is controlled to rotate the strainer element between said opposed 180 degree positions and a second state in which rotation of the strainer element is inhibited, wherein the support structure includes a frame, and the strainer element includes a strainer member mounted in the frame; and a shaft for supporting the strainer member relative to the frame; wherein said control member has a first state to retain particulate at the strainer member and a second state for releasing particulate from the strainer member; an upstream processing device disposed upstream of the strainer element and that generates a fault signal representative of the existence of a fault material; and a sensor disposed at the strainer element for sensing the presence of particulate or objects at the strainer element after movement of the strainer element to the release position, and control valve means disposed downstream of said strainer element controlled from said control member, said control valve means includes a first valve disposed downstream of said strainer element, controlled from said electrical controller and connecting the strainer element to a discharge site; and a second valve disposed downstream of said strainer element, controlled from said electrical controller and connecting the strainer element to a collection site wherein said first valve is open in the first state in the absence of the fault signal to control the conveyance of particulate to the discharge site and said second valve is open in the second state in the presence of the fault signal to control the conveyance of particulate to the collection site.

According to a preferred embodiment the control member comprises an electrical controller that includes one of a timer and pressure sensor. The electrical controller may further include a logic circuit for controlling the first and second valves in a mutually exclusive manner and may further include logic gates.

In another preferred embodiment the electrical controller includes one of a timer for setting a predetermined period of rotation in the first state, and a pressure sensor for setting a predetermined period of rotation in the first state.

Advantageously, the strainer element extends in a plane and is connected between adjacent piping sections of the piping system, said strainer element being moveable between a first position thereof in which the strainer element plane extends substantially orthogonal to a piping system longitudinal axis in order to retain particulate, and a second position, in which the strainer element plane is moved in a direction of the longitudinal axis of the piping system so that the strainer element plane is disposed out of the orthogonal plane so as to release any retained particulate into one of the adjacent piping sections.

In another version in accordance with the present invention the screening apparatus includes a controller coupled with the strainer element for controlling the movement of the strainer element relative to the support structure and responsive to the sensor and the fault signal for generating an alarm condition if objects or particulate are still detected by the sensor after the strainer member has transitioned to a release position.

The sensor can comprise a pressure sensor, a capacitive sensor or an optical sensor.

Preferably, the strainer member comprises a circular strainer.

In accordance with the invention there is also provided a method of controlling a strainer element that is used for the purpose of retaining particulate while permitting the passage of a liquid through the strainer element, comprising controlling the strainer element by means of an electrical controller, so as to control the movement of the strainer element between opposed 180 degree positions including a retaining position in which particulate or objects are impeded by the strainer element and a release position in which particulate or objects are released through the strainer element, providing a piping system from the strainer to alternate separate sites including a discharge site and a collection site, sensing a fault condition upstream of the strainer element to provide either a fault signal or a no fault signal depending on whether there is a fault upstream or not, said electrical controller being responsive to the sensed fault condition to perform one of, i) connecting the strainer element in the release position via the piping system and a first valve disposed downstream of said strainer element and having open and closed position to the collection site, with a sensor disposed at the strainer element sensing the presence of particulate or objects at the strainer element after movement of the strainer element to the release position and, controlling the first valve from the electrical controller to direct particulate or objects towards the collection site responsive to the fault signal, and connecting the strainer element in the release position via the piping system and a second valve disposed downstream of said strainer element and having open and closed positions, and ii) controlling the second valve from the electrical controller to direct flow to the discharge site responsive to the no fault signal

### Brief Description of the Drawings

It should be understood that the drawings are provided for the purpose of illustration only and are not intended to define the limits of the disclosure. In the drawings depicting the present invention, all dimensions are to scale. The foregoing and other objects and advantages of the embodiments described herein will become apparent with reference to the following detailed description when taken in conjunction with the accompanying drawings in which:
FIG. 1 is a diagram of a first embodiment of a strainer control system in accordance with the present invention and employing a timer control;
FIG. 2 is diagram of a second embodiment of a strainer control system in accordance with the present invention and employing a pressure sensor;
FIG. 3 is a diagram showing somewhat further detail relating to the fault event;
FIG. 4 is a diagram showing further details at the strainer element to illustrate the rotation of the strainer element;
FIG. 5 is a perspective view of the strainer element for illustrating the 180 degree rotation of the strainer element;
FIG. 6 is a partial system diagram of an alternate embodiment of that described in FIG. 1;
FIG. 7 is a timing diagram associated with the system illustrated in FIG. 1;
FIG. 8 is a timing diagram associated with the system of FIG. 6;
FIG. 9 is an alternate diagram of a strainer control system in accordance with the present invention;
FIG. 10 is a schematic diagram illustrating the strainer of the present invention with multiple release positions;
FIG. 11 is a schematic diagram illustrating the fact that the strainer may be rotated in either direction;
Fig. 12 is a schematic diagram of one system for detecting the presence of objects on the strainer and employing a pressure sensor;
Fig. 13 is a schematic diagram similar to that illustrated in fig. 12 but using capacitive sensors for the detection of objects or the like;
Fig. 14 is a schematic diagram similar to that illustrated in Figs. 12 and 13 but using optical sensors; and
Fig. 15 is a schematic diagram of an alternate strainer configuration.

### Detailed Description

Reference is now made to the block diagrams illustrating different modes of operation of the strainer and associated control system for the strainer. One of the purposes of the control system, along with the unique construction of the strainer element, is to maximise the up-time of the system operation. Another feature that is described with regard to the block diagrams is a system for protecting against any fault event or process upset when debris or detritus become entrained in the fluid flow.

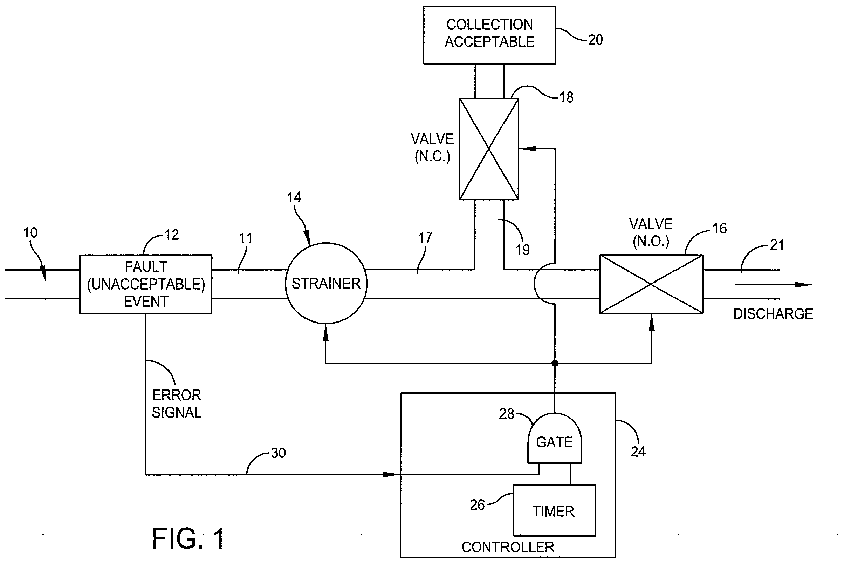

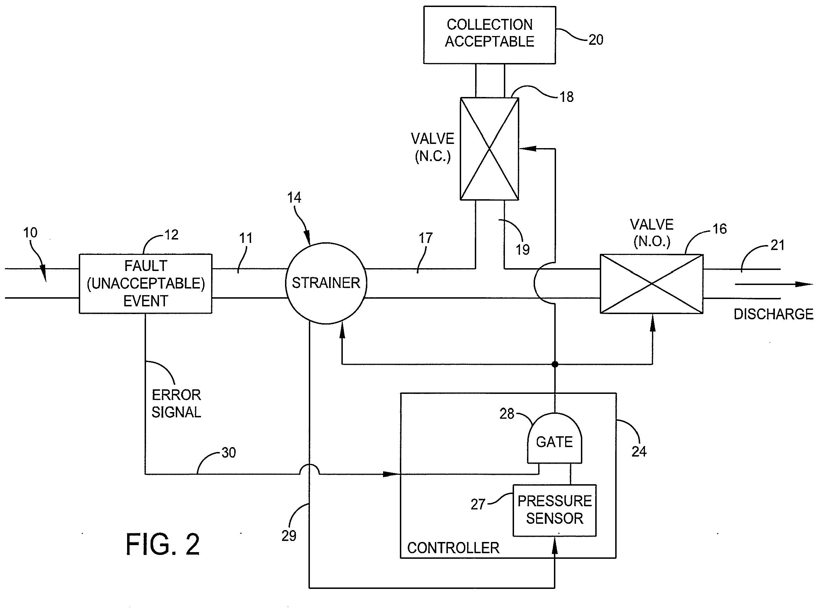

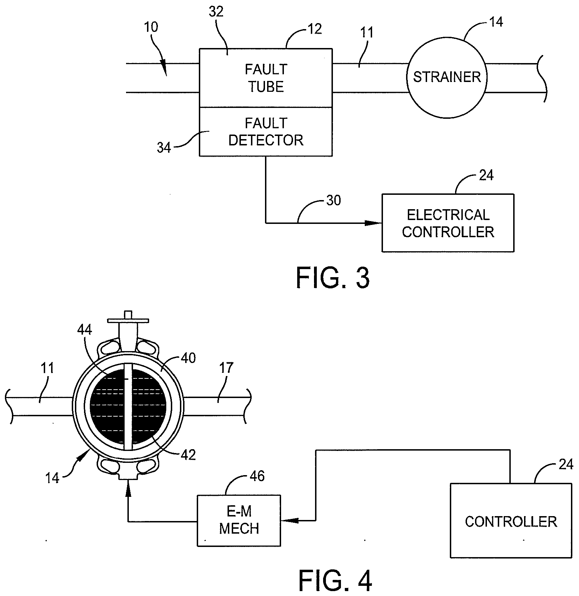

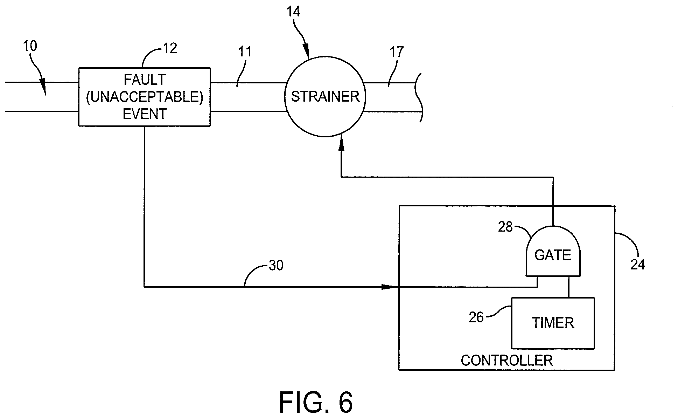

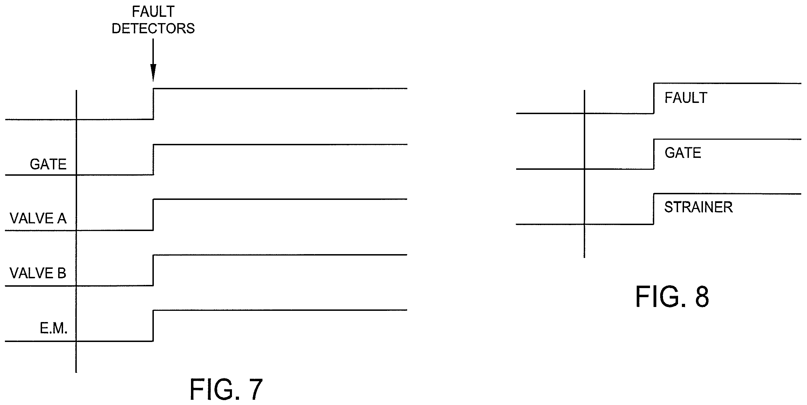

Fig. 1 is a schematic block diagram of a first embodiment of the present invention in which the strainer element is controlled for rotation by means of a timer. The second embodiment of the present invention is shown in the block diagram of Fig. 2 in which pressure sensing occurs at the strainer and the rotation of the strainer in turn is controlled by a pressure sensor that senses a pressure differential at the strainer. Figs. 3-5 show further details associated with either the system of Fig. 1 or the system of Fig. 2. Fig. 6 shows an alternate simplified control diagram. Finally, Figs. 7 and 8 are timing diagrams associated with the different embodiments described herein.

With reference to the schematic block diagram of Fig.1, there is illustrated a flow line 10 shown coupled to a fault detector 12 by way of the line or piping 11. Downstream of the fault detector 12 is the strainer 14 of the present invention. The system illustrated in Fig. 1 also includes a downstream valve 16 coupled by way of the piping 17 from the strainer 14. A divert pipe 19 is also shown coupling from the piping 17 to a second valve 18. The second valve 18 can, in turn, connect by way of piping to the collection receptacle 20. The diversion via the valve 18 allows a diversion path of detritus, such as from a fault event. This fault event may be, for example, when a Uv tube, used in a filtration system, breaks and parts of the tube assembly flow to the strainer and are held at the strainer.

In the system in FIG. 1, under normal operating conditions, when there is no fault detected, the controller 24 provides the following operation. Controller 24 may be an electrical controller and is illustrated as including a timer 26 and a gate 28. Under normal, no fault, operation, a timing signal from the timer 26 is coupled by way of the gate 28 to the strainer 14. This action enables the strainer 14 to rotate through 180 degrees thus releasing any foreign objects that had been retained by the strainer. This basic operation is illustrated in FIG. 6 wherein the output of the gate 28 couples only to the strainer element 14. Under a no-fault condition the signal from gate 28 to the valves 16 and 18 is such that both of these valves are maintained in a normal position. The valve 16 is normally open and the valve 18 is normally closed. Thus, under that no fault condition, when the strainer 14 is rotated any foreign objects are coupled by way of the piping 17 and the valve 16 to a discharge point or location at 21. Actually, in the version in FIG. 6 that operation is possible without controlling either of the valves 16 or 18.

If a fault event occurs, and with further reference to FIG. 3, then an error signal is generated on line 30. FIG. 3 illustrates one of many different fault conditions that may occur. FIG. 3 illustrates, for example, a UV tube assembly at 32 that has a fault detector 34 associated therewith. If one of the UV tubes breaks then a signal is generated from detector 34 on the error signal line 30 coupled to the electrical controller 24 and in turn to the sensing gate 28. Under that condition, the output from the gate 28 controls the strainer 14, and the valve 16 as well as the valve 18. The signal from the gate 28 causes the strainer 14 to rotate releasing any of the detritus such as pieces from the UV tube. However, it is desired in accordance with that fault mode of operation that any of the foreign objects, instead of being discharged through the valve 16 to location 21, are discharged through the valve 18 to the collection receptacle 20. Thus, in that mode of operation when the output is generated at the gate 28, this causes the valve 16 to switch from a normally open to a closed position. This blocks the flow of liquid to the discharge at 21. At the same time, the valve 18, which is a normally closed valve, opens and thus the foreign objects are conveyed from the strainer 14, by way of the valve 18, to the collection receptacle 20. This collection receptacle is particularly suited for receiving fault derived items for inspection thereof.

With reference to the schematic block diagram of Fig. 2, many of the same reference numbers are used as illustrated in Fig. 1 to identify basically the same components. In Fig. 2 there is illustrated a flow line 10 shown coupled to a fault detector 12 by way of the line or piping 11. Downstream of the fault detector 12 is the strainer 14 of the present invention. The system illustrated in Fig. 2 also includes a downstream valve 16 coupled by way of the piping 17 from the strainer 14. A divert pipe 19 is also shown coupling from the piping 17 to a second valve 18. The second valve 18 can, in turn, connect by way of piping to the collection receptacle 20. The diversion via the valve 18 allows a diversion path of detritus, such as from a fault event. This fault event may be, for example, when a UV tube, used in a filtration system, breaks and parts of the tube assembly flow to the strainer and are held at the strainer.

In the system of Fig. 2, under normal operating conditions, when there is no fault detected, the controller 24 provides the following operation. Controller 24 may be an electrical controller and is illustrated as including a pressure sensor 27 and a gate 28. Under normal, no fault, operation, a timing signal from the pressure sensor 27 is coupled by way of the gate 28 to the strainer 14. This action enables the strainer 14 to rotate through 180 degrees thus releasing any foreign objects that had been retained by the strainer. This basic operation is illustrated in Fig. 6 wherein the output of the gate 28 couples only to the strainer element 14. Under a no-fault condition the signal from gate 28 to the valves 16 and 18 is such that both of these valves are maintained in a normal position. The valve 16 is normally open and the valve 18 is normally closed. Thus, under that no fault condition, when the strainer 14 is rotated any foreign objects are coupled by way of the piping 17 and the valve 16 to a discharge point or location at 21. Actually, in the version in Fig. 6 that operation is possible without controlling either of the valves 16 or 18.

In Fig. 2, rather than using a timer the control at the gate 28 is from the pressure sensor 27. The pressure sensor 27 is responsive to a sensed differential pressure at the strainer 14. For that purpose a pair of pressure sensors may be disposed at opposite upstream and downstream sides of the strainer in order to detect a differential pressure essentially across the strainer 14. This differential pressure is illustrated in Fig. 2 by the feedback line 29 that couples from the pair of sensors at the strainer 14 to the pressure sensor 27. The pressure sensor 27 may have a threshold level that is set so that once a predetermined differential pressure is reached, as detected on line 29, the pressure sensor 27 sends a signal to the gate 28 as previously described in connection with the operation of the embodiment shown in Fig. 1.

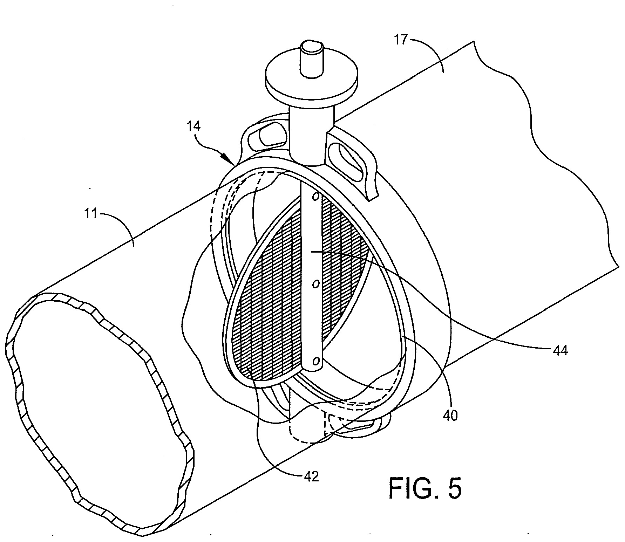

Figs. 4 and 5 describe further details of the strainer element. The strainer element 14 may be considered as comprised of a main support frame 40, the rotatable strainer 42 and support shaft 44. The strainer 42 is fixedly attached to the shaft 44 and rotates upon rotation of the shaft 44. The shaft 44 is supported within the frame 40. Bearings (not shown) may be provided at opposite ends of the shaft 44 between the shaft 44 and the frame 40. These additional details are schematically described in Fig. 4. Fig. 4 also illustrates the controller 24 and an electro-mechanical mechanism 46 that is disposed between the controller 34 and the shaft 44. The electro-mechanical mechanism converts an electrical signal from the controller 24 into a mechanical motion; or in other words causes a 180 degree rotation of the shaft 44. As indicated previously, this rotation may be based either upon a timer, a pressure sensor or may even be based on other input parameters, including but not limited to temperature or temperature differential. Rotation of the shaft 44 causes immediate rotation of the strainer 42.

With reference to the schematic block diagram of Fig. 6, many of the same reference numbers are used as illustrated in Figs, 1 and 2 to identify basically the same components. In Fig, 6 there is illustrated a flow line 10 shown coupled to a fault detector 12 by way of the line or piping 11. Downstream of the fault detector 12 is the strainer 14 of the present invention. In the system in Fig. 6, under normal operation conditions, when there is no fault detected, the controller 24 provides the following operation. Controller 24 may be an electrical controller and is illustrated as including a timer 26 and a gate 28 (or alternatively a pressure sensor as in Fig. 2). Under normal, no fault, operation, a timing signal from the timer 26 is coupled by way of the gate 28 to the strainer 14. This action enables the strainer 14 to rotate through 180 degrees thus releasing any foreign objects that had been retained by the strainer. This basic operation is illustrated in Fig. 6 wherein the output of the gate 28 couples only to the strainer element 14.

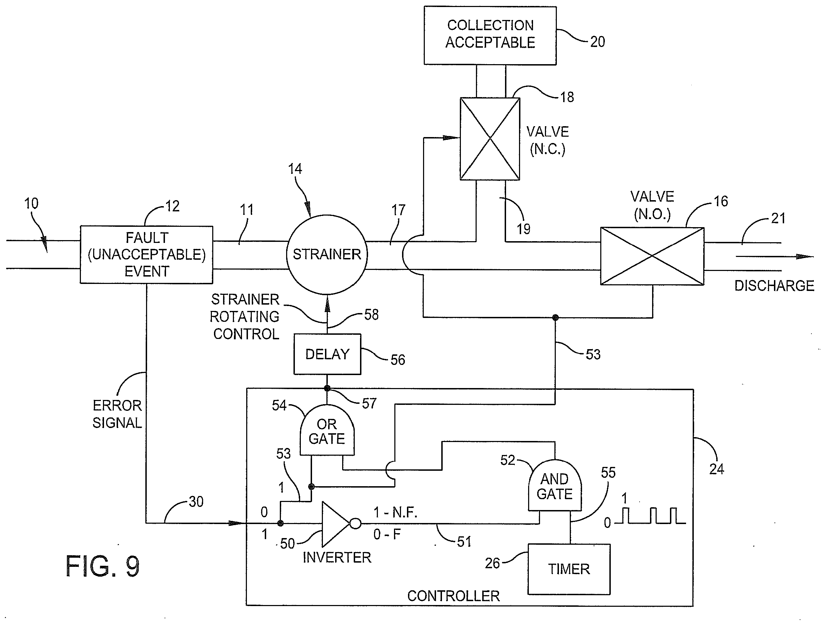

With reference to the schematic block diagram of Fig. 9 there is illustrated a flow line 10 shown coupled to a fault detector 12 by way of the line or piping 11. The fault detector may be the same as illustrated in Fig. 3 including a detector 34 that essentially issues a "fault" signal upon a fault occurring such as a breakage of a component. Downstream of the fault detector 12 is the strainer 14 of the present invention. The system illustrated in Fig. 9 also includes a downstream valve 16 coupled by way of the piping 17 from the strainer 14. A divert pipe 19 is also shown coupling from the piping 17 to a second valve 18. The second valve 18 can, in turn, connect by way of piping to the collection receptacle 20. The diversion via the valve 18 allows a diversion path of detritus, such as from a fault event. This fault event may be, for example, when a UV tube, used in a filtration system, breaks and parts of the tube assembly flow to the strainer and are held at the strainer for release to a specific collection receptacle.

In the system in FIG. 9, under normal operating conditions, when there is no fault detected, the controller 24 provides the following operation. Controller 24 may be an electrical controller and is illustrated as including a timer 26 and a series of electronic control gates identified in FIG. 9 as an inverter 50, an AND gate 52, and an OR gate 54. Under normal, "no fault", operation, a timing signal from the timer 26 is coupled by way of the gate 52 and gate 54 to the strainer 14. This action enables the strainer 14 to rotate through 180 degrees thus releasing any foreign objects that had been retained by the strainer. This basic operation is also illustrated in FIG. 6 wherein the output of the gate 28 couples only to the strainer element 14. Under a "no-fault" condition the valves 16 and 18 are operated such that both of these valves are maintained in a normal position. The valve 16 is normally open and the valve 18 is normally closed. Thus, under that "no fault" condition, when the strainer 14 is rotated any foreign objects are coupled by way of the piping 17 and the valve 16 to a discharge point or location at 21.

In a "no fault" state, one can consider that the signal on line 30 is at a logical "0" level. This signal is inverted at the inverter gate 50 so that the signal on the line is at a logical "1" state. This signal, along with the output of the timer 26 on line 55 is coupled to the AND gate 52. The signal on line 51 essentially enables the gate 52 so that any signal pulse from the timer 28 is coupled directly through the AND gate 52 to the OR gate 54, and, in turn, via the delay circuit 56 and lines 57 and 58 to the strainer 14 for control of the rotation of the strainer 14. The periodic output from the timer 26 may be a pulse for operating the electro-mechanical mechanism 46 (see FIG. 4) to cause periodic rotation of the strainer 14. Alternatively, a pressure sensing arrangement may be used in place of the timer, as in FIG. 2. The output of the timer is controlled through the OR gate 54 and the delay 56 to operate the rotation of the strainer 14. Under that same "no fault" condition the logical "0" on line 53 directly controls the valves 16 and 18 so that both of the valves are maintained in their normal, unactuated state. In that state the valve 16 is normally open and the valve 18 is normally closed. Thus, under this "no fault" condition, when the strainer 14 is rotated any foreign objects are coupled by way of the piping 17 and the valve 16 to a discharge point or location at 21.

If a "fault" event occurs, and with further reference to FIG. 3, then an error signal is generated on line 30. FIG. 3 illustrates one of many different fault conditions that may occur. FIG. 3 illustrates, for example, a UV tube assembly at 32 that has a fault detector 34 associated therewith. If one of the UV tubes breaks then a signal is generated from detector 34 on the error signal line 30 coupled to the electrical controller 24 and in turn to the sensing gates 50 and 54. Under that condition, the output from the inverter gate 50 goes to a logical "0" essentially inhibiting the AND gate 52 so that the rotation of the strainer 14 is no longer controlled from the timer. However, the logical "1" signal on input line 30 is coupled via line 53 into one of the two inputs of the OR gate 54. This logical "1" signal on line 53 is coupled via the OR gate 54 and the delay circuit 56 to control rotation of the strainer 14. The delay circuit may be optional. It can be used to delay the rotation signal to the strainer 14 so that one is assured that the valves 16 and 18 are switched to their alternate position before the valves change state. In that way any fault derived items are recovered in the receptacle 20, and not discharged to location 21.

It is desired in accordance with this "fault" mode of operation that any of the foreign objects (event items), instead of being discharged through the valve 16 to location 21, are discharged through the valve 18 to the collection receptacle 20. Thus, in this mode of operation when the output is generated at the line 53, this causes the valve 16 to switch from a normally open to a closed position. This blocks the flow of liquid to the discharge at location 21. At the same time, the valve 18, which is a normally closed valve, opens and thus the foreign objects (event items) are conveyed from the strainer 14, by way of the valve 18, to the collection receptacle 20. This collection receptacle 20 is particularly suited for receiving fault derived items for inspection thereof.

Various embodiments of the present invention are illustrated in FIGS. 1-9. One of the keys that is depicted in each of these embodiments is the use of a fault detector. Refer, for example, to the reference number 12 in FIGS. 1-3. FIG. 3 in particular shows a fault detector at 34 described as generating a fault condition on line 30 indicative of some type of a breakage in the feed line, such as a tube breakage.

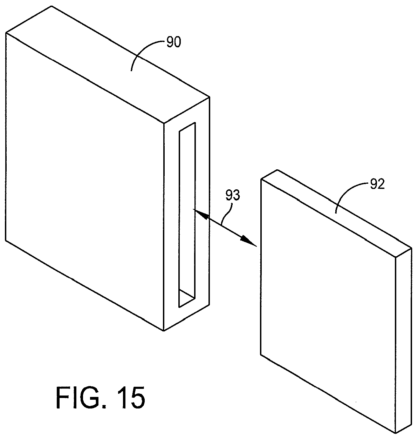

In some embodiments described herein, the strainer is illustrated as a circular straining component that can be rotated basically between a "retaining" position in which the straining element goes across the strainer frame to block and thus retain objects, debris, detritus or any other items passing through the piping system. The other basic position can be considered as a "release" position wherein the strainer is rotated or otherwise moved so as to disengage from the strainer frame, away from the first position, enabling a release of objects debris, detritus or any other items passing through the piping system and retained by the strainer. Although the embodiments describe herein use a circular rotating strainer element, FIG. 15 herein also schematically illustrates a strainer frame 90 and a mesh-shaped straining element 92, both of a different configuration. FIG. 15 illustrates these components in a square or rectangular form. However, these components may assume many different shapes. In FIG. 15 the straight arrow 93 illustrates the motion of the mesh strainer 92 relative to the frame 90 so as to either be in an impeding or retaining position within the frame (slid into the frame 90), or moved out of the frame 90 to a released position.

In discussing objects that are retained by the strainer element, these may be in the form of hair, lint or other minor objects or pieces that should be released periodically from the strainer but that do not necessarily represent any significant fault, error or alarm condition. On the other hand, as described herein, there are circumstances where the objects retained by the strainer are dislodged items such as pieces of glass from a UV tube. In that instance, it is desired to, not only release these objects, but to also collect the objects. In this regard, reference may be made to FIGS. 1 and 2 and the discharge site at 21, as well as the collection site or receptacle 20. Minor objects are meant, in accordance with the present invention, to be released to a discharge location or site, while major objects are meant to be released to a collection location or site.

In some embodiments described herein, the control of the straining element had been indicated as being by rotation through 180 degrees. This 180 degree rotation does release objects from the mesh strainer surface. When rotated 180 degrees, this then leaves the strainer element in a further impeding position, once fully rotated through 180 degrees. This new position also enables any liquid flowing through the strainer to dislodge any objects that might remain retained on the opposed side of the mesh strainer element.

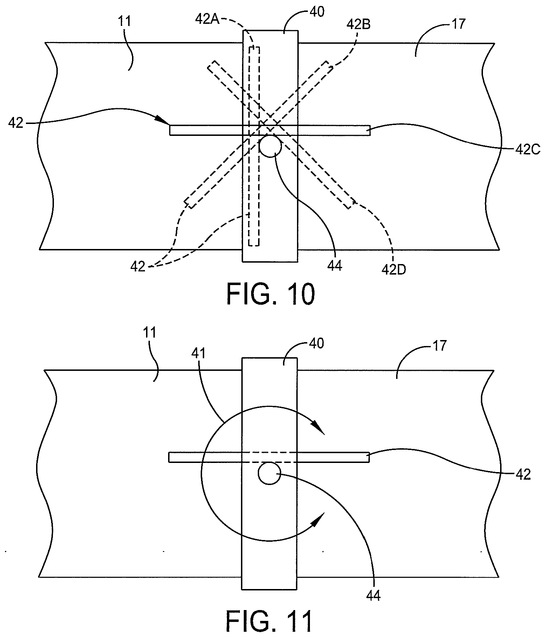

FIG. 10 is a schematic diagram that simply illustrates different possible positions of the strainer element. At position 42A, illustrated in dotted outline, the mesh strainer element 42 is essentially closed against the frame so that any objects flowing toward the strainer are impeded or blocked at the strainer element. The strainer element 42A is thus in a position for blocking any objects while allowing liquid to pass through the mesh. FIG. 10 also illustrates, at position 42B, the strainer element 42 in dotted outline having been rotated through approximately 45 degrees from position 42A. FIG. 10 also illustrates, in solid outline, the strainer at position 42C wherein there is a minimum impeding of the flow through the strainer element. In position 42C the strainer element is essentially coincident with the longitudinal axis of the piping 11, 17. Finally, in FIG. 10, at position 42D the strainer element is shown in dotted outline rotated though an additional 45 degrees from position 42C. In FIG. 10 the control can also be such that the rotation can be through greater than 180 degrees, such as through intervals of 360, 540 or 720 degrees. In FIG. 11 the bidirectional arrow 41 indicates the possibility of the strainer element being rotated in either direction such as from the position at 42A in FIG. 10 to any other position and in either rotational direction so as to transition the strainer element between retaining and released positions. For example, the control may be such that the strainer is rotated through say 90 degrees to release particulate or objects, and is subsequently rotated back the same 90 degrees but in the opposite rotational direction, and essentially re-positioned back to the retaining position.

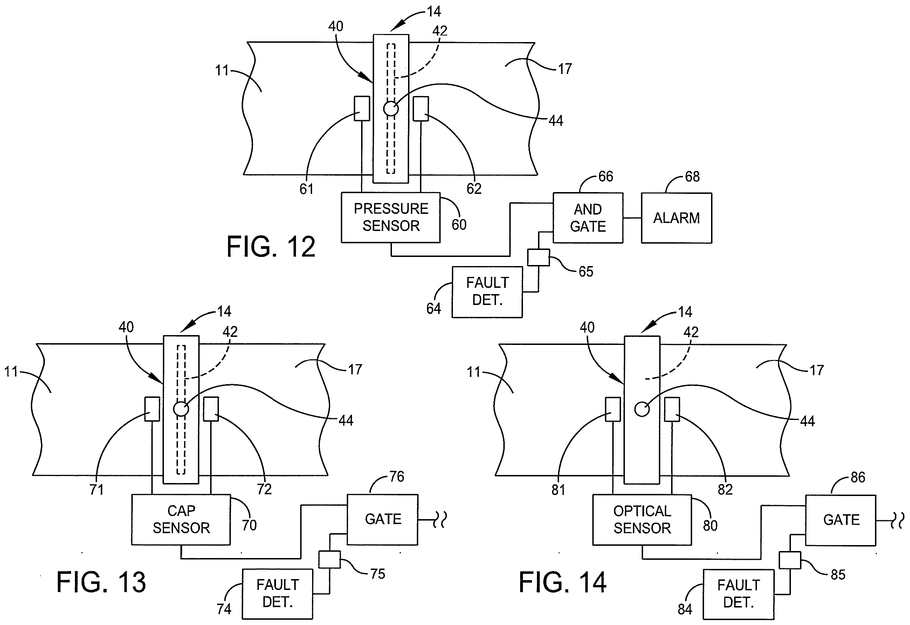

Reference is now made to FIGS. 12-14 for further aspects of the present invention. Previously, in the diagram of FIG. 2, a pressure sensor 27 is illustrated. The main reason for this pressure sensor in FIG. 2 is to sense any build up at the strainer 14. Such a buildup is to indicate that it is time to release the strainer so minor particulate or objects can be, for example, released to the discharge site. In the embodiment of FIG. 2 this release is by detecting an elevated pressure across the strainer 14. Now, in FIG. 12, a pressure sensor is also shown at 60 having separate pressure detectors 61 and 62 at opposed downstream and upstream sides of the strainer 40. In FIG. 12 the same reference numbers are used as previously described in connection with FIGS. 2 and 5. The pressure sensor 60 illustrated in FIG. 12 may in fact be the same as the pressure sensor 27 shown in FIG. 2 but is used to control the system for a somewhat different purpose. It is noted that in the diagram of FIG. 12 there is also provided a fault detector 64, delay 65 AND gate 66 and alarm circuit 68. The purpose of the pressure sensor 60 in FIG. 12 is to reaffirm that, in fact, any objects that were to be released at the strainer 14, have in fact been released. If they have been released then there is a minimum pressure differential between the sensors 61 and 62, and this indicates a no alarm state.

In FIG. 12 once a fault occurs as detected by the fault detector 64, this is coupled to the AND gate 66 which also receives a signal from the pressure sensor 60. The AND gate 66 requires signals from both the pressure sensor 60 and the fault detector 64. The delay 65, as well as the same circuit (75, 85) in FIGS. 13 and 14, is illustrated as connected between the fault detector 64 and the gate 66. This circuit may be optional but does illustrate that some delay may be helpful so that the fault signal is delayed to assure that the strainer has been re-positioned to its retaining state. In that way the sensing at the gate only occurs once the strainer is again in its retaining position so that an accurate alarm state is achieved. If there is a sufficient pressure differential sensed at the pressure sensor 60 along with an indication of a "fault" at the detector 64, this activates the AND gate 66 which, in turn, activates the alarm 68. This will provide an alarm to the operator that, in fact, a supposedly released object has not in fact been released from the strainer.

FIGS. 13 and 14 are diagrams that are close to the diagram shown in FIG. 12. However, in FIG. 13, rather than using a pressure sensor for detecting the presence of objects on the strainer, a capacitive sensor 70 is used. The capacitive sensor 70 may include opposed sensor plates 71 and 72. FIG. 13 also shows the fault detector at 74, delay 75 and the AND gate at 76. In FIG. 13 the capacitive sensor plates 71, 72 may take on many different forms, with the intent of forming a capacitive circuit wherein the value of the capacitance between the plates 71, 72 is effected by any remaining objects, debris, detritus or any other items passing through the piping system and previously retained by the strainer.

FIG. 14 illustrates still another embodiment similar to that illustrated in FIGS. 12 and 13 but employing an optical sensor 80. The optical sensor 80 may include a transmitter 81 and receiver 82. These elements are shown schematically in FIG. 14. The signal from the optical sensor 80 would indicate the remaining presence of some object on the strainer. FIG. 14 also illustrates the aforementioned fault detector 84, delay 85 and the AND gate 88. In FIGS. 13 and 14 an alarm is also used but not specifically illustrated. See FIG. 12 for the alarm 68. In all versions of FIGS, 12-14 the alarm may be set at different thresholds depending upon the particular object that is to be collected. The threshold can be determined by the sensor levels detected at sensors 60, 70 and 80. These levels can be established so that minor particulate or objects do not set the alarm off.

Having now described a limited number of embodiments of the present invention, it should now be apparent to those skilled in the art that numerous other embodiments and modifications thereof are contemplated as falling within the scope of the present invention, as defined by the appended claims. For example, the strainer that has been used is considered as rotating through 180 degrees between positions. However, there may be other strainer configurations in which opposite positions could be attained by means of rotation amounts less than or greater than 180 degrees (FIG. 10), or with the use of non-rotational mechanisms (FIG. 11) for either retaining or releasing items from the strainer.

## Claims

1. A screening apparatus comprising a strainer element (14) disposed in a piping system (11, 17) and used for the purpose of retaining particulate while permitting the passage of a liquid through the strainer element, **characterised in that** the apparatus comprises a support structure for the strainer element to enable rotation of the strainer element within the support structure between opposed 180 degree positions, a control member (24) comprising an electrical controller coupled with the strainer element for controlling the rotation of the strainer element between the opposed 180 degree positions, said strainer element, in both opposed 180 degree positions thereof impeding any particulate while permitting the passage of a liquid, said control member having a first state in which rotation of the strainer element is controlled to rotate the strainer element between said opposed 180 degree positions and a second state in which rotation of the strainer element is inhibited, wherein the support structure includes a frame (40), and the strainer element includes a strainer member (42) mounted in the frame; and a shaft (44) for supporting the strainer member relative to the frame; wherein said control member has a first state to retain particulate at the strainer member and a second state for releasing particulate from the strainer member; an upstream processing device (12) disposed upstream of the strainer element and that generates a fault signal representative of the existence of a fault material; and a sensor (60) disposed at the strainer element for sensing the presence of particulate or objects at the strainer element after movement of the strainer element to the release position, and control valve means (16,18) disposed downstream of said strainer element controlled from said control member, said control valve means includes a first valve (16) disposed downstream of said strainer element, controlled from said electrical controller and connecting the strainer element to a discharge site; and a second valve (18) disposed downstream of said strainer element, controlled from said electrical controller and connecting the strainer element to a collection site wherein said first valve is open in the first state in the absence of the fault signal to control the conveyance of particulate to the discharge site and said second valve is open in the second state in the presence of the fault signal to control the conveyance of particulate to the collection site.

2. The screening apparatus of claim 1 wherein the control member comprises an electrical controller that includes one of a timer and pressure sensor.

3. The screening apparatus of claim 2 wherein the electrical controller further includes a logic circuit for controlling the first and second valves in a mutually exclusive manner.

4. The screening apparatus of claim 3 wherein the electrical controller further includes logic gates.

5. The screening apparatus of claim 1 and any of claims 2 to 4 when dependent on claim 1 wherein the electrical controller includes one of a timer for setting a predetermined period of rotation in the first state, and a pressure sensor for setting a predetermined period of rotation in the first state.

6. The screening apparatus of any preceding claim wherein the strainer element extends in a plane and is connected between adjacent piping sections of the piping system, said strainer element being moveable between a first position thereof in which the strainer element plane extends substantially orthogonal to a piping system longitudinal axis in order to retain particulate, and a second position, in which the strainer element plane is moved in a direction of the longitudinal axis of the piping system so that the strainer element plane is disposed out of the orthogonal plane so as to release any retained particulate into one of the adjacent piping sections.

7. The screening apparatus of any preceding claim including a controller coupled with the strainer element for controlling the movement of the strainer element relative to the support structure and responsive to the sensor and the fault signal for generating an alarm condition if objects or particulate are still detected by the sensor after the strainer member has transitioned to a release position.

8. The screening apparatus of any preceding claim wherein the sensor comprises a pressure sensor.

9. The screening apparatus of any of claims 1 to 8 wherein the sensor comprises a capacitive sensor.

10. The screening apparatus of any of claims 1 to 9 wherein the sensor comprises an optical sensor.

11. The screening apparatus of any preceding claim wherein the strainer member comprises a circular strainer.

12. A method of controlling a strainer element that is used for the purpose of retaining particulate while permitting the passage of a liquid through the strainer element, comprising controlling the strainer element by means of an electrical controller, so as to control the movement of the strainer element between opposed 180 degree positions including a retaining position in which particulate or objects are impeded by the strainer element and a release position in which particulate or objects are released through the strainer element, providing a piping system from the strainer to alternate separate sites including a discharge site and a collection site, sensing a fault condition upstream of the strainer element to provide either a fault signal or a no fault signal depending on whether there is a fault upstream or not, said electrical controller being responsive to the sensed fault condition to perform one of, i) connecting the strainer element in the release position via the piping system and a first valve disposed downstream of said strainer element and having open and closed position to the collection site with a sensor disposed at the strainer element sensing the presence of particulate or objects at the strainer element after movement of the strainer element to the release position, and, controlling the first valve from the electrical controller to direct particulate or objects towards the collection site responsive to the fault signal, and connecting the strainer element in the release position via the piping system and a second valve disposed downstream of said strainer element and having open and closed positions, and ii) controlling the second valve from the electrical controller to direct flow to the discharge site responsive to the no fault signal.

## Patentansprüche

1. Eine Aussiebungsvorrichtung, beinhaltend eine Siebkomponente (14), die in einem Rohrleitungssystem (11, 17) angeordnet ist und zum Zweck des Rückhaltens von Feststoffen verwendet wird, während der Durchgang einer Flüssigkeit durch die Siebkomponente gestattet wird, **dadurch gekennzeichnet, dass** die Vorrichtung Folgendes beinhaltet: eine Trägerstruktur für die Siebkomponente, um die Drehung der Siebkomponente innerhalb der Trägerstruktur zwischen entgegengesetzten 180-Grad-Stellungen zu ermöglichen, ein Steuerelement (24), das eine mit der Siebkomponente gekoppelte elektrische Steuereinheit zum Steuern der Drehung der Siebkomponente zwischen den entgegengesetzten 180-Grad-Stellungen beinhaltet, wobei die Siebkomponente in ihren beiden entgegengesetzten 180-Grad-Stellungen etwaige Feststoffe aufhält, während der Durchgang einer Flüssigkeit gestattet wird, wobei das Steuerelement einen ersten Zustand, in dem die Drehung der Siebkomponente gesteuert wird, um die Siebkomponente zwischen den entgegengesetzten 180-Grad-Stellungen zu drehen, und einen zweiten Zustand, in dem die Drehung der Siebkomponente verhindert wird, aufweist, wobei die Trägerstruktur einen Rahmen (40) umfasst und die Siebkomponente ein in dem Rahmen montiertes Siebelement (42) und eine Achse (44) zum Tragen des Siebelements relativ zu dem Rahmen umfasst; wobei das Steuerelement einen ersten Zustand zum Rückhalten von Feststoffen an dem Siebelement und einen zweiten Zustand zum Freisetzen von Feststoffen aus dem Siebelement aufweist; eine stromaufwärtsseitige Verarbeitungseinrichtung (12), die stromaufwärts der Siebkomponente angeordnet ist und die ein Störungssignal erzeugt, das für die Anwesenheit eines Störmaterials repräsentativ ist; und einen Sensor (60), der zum Erkennen der Anwesenheit von Feststoffen oder Objekten an der Siebkomponente nach der Bewegung der Siebkomponente in die Freisetzungsstellung an der Siebkomponente angeordnet ist, und ein stromabwärts der Siebkomponente angeordnetes Steuerventilmittel (16, 18), das von dem Steuerelement gesteuert wird, wobei das Steuerventilmittel ein stromabwärts der Siebkomponente angeordnetes erstes Ventil (16), das von der elektrischen Steuereinheit gesteuert wird und das die Siebkomponente mit einer Auslassstelle verbindet, und ein stromabwärts der Siebkomponente angeordnetes zweites Ventil (18), das von der elektrischen Steuereinheit gesteuert wird und das die Siebkomponente mit einer Sammelstelle verbindet, umfasst, wobei das erste Ventil in dem ersten Zustand in Abwesenheit des Störungssignals offen ist, um die Beförderung von Feststoffen zu der Auslassstelle zu steuern, und das zweite Ventil in dem zweiten Zustand bei Anwesenheit des Störungssignals offen ist, um die Beförderung von Feststoffen zu der Sammelstelle zu steuern.

2. Aussiebungsvorrichtung gemäß Anspruch 1, wobei das Steuerelement eine elektrische Steuereinheit beinhaltet, die eines von einem Zeitgeber und einem Drucksensor umfasst.

3. Aussiebungsvorrichtung gemäß Anspruch 2, wobei die elektrische Steuereinheit ferner eine Logikschaltung zum Steuern des ersten und zweiten Ventils auf gegenseitig ausschließende Weise umfasst.

4. Aussiebungsvorrichtung gemäß Anspruch 3, wobei die elektrische Steuereinheit ferner Logikgatter umfasst.

5. Aussiebungsvorrichtung gemäß Anspruch 1 und einem der Ansprüche 2 bis 4, wenn von Anspruch 1 abhängig, wobei die elektrische Steuereinheit eines von einem Zeitgeber zum Festsetzen eines vorgegebenen Drehungszeitraums in dem ersten Zustand und einem Drucksensor zum Festsetzen eines vorgegebenen Drehungszeitraums in dem ersten Zustand umfasst.

6. Aussiebungsvorrichtung gemäß einem der vorhergehenden Ansprüche, wobei sich die Siebkomponente in einer Ebene erstreckt und zwischen benachbarten Rohrleitungsabschnitten des Rohrleitungssystems angeschlossen ist, wobei die Siebkomponente zwischen einer ersten Stellung davon, in der sich die Ebene der Siebkomponente im Wesentlichen orthogonal zu einer Längsachse des Rohrleitungssystems erstreckt, um Feststoffe zurückzuhalten, und einer zweiten Stellung, in der die Ebene der Siebkomponente in eine Richtung der Längsachse des Rohrleitungssystems bewegt ist, sodass die Ebene der Siebkomponente außerhalb der orthogonalen Ebene angeordnet ist, um etwaige zurückgehaltenen Feststoffe in einen der benachbarten Rohrleitungsabschnitte freizusetzen, beweglich ist.

7. Aussiebungsvorrichtung gemäß einem der vorhergehenden Ansprüche, die eine Steuereinheit umfasst, welche mit der Siebkomponente gekoppelt ist, um die Bewegung der Siebkomponente relativ zu der Trägerstruktur zu steuern, und auf den Sensor und das Störungssignal reagiert, um eine Alarmbedingung zu erzeugen, wenn von dem Sensor immer noch Objekte oder Feststoffe detektiert werden, nachdem das Siebelement in eine Freisetzungsstellung übergegangen ist.

8. Aussiebungsvorrichtung gemäß einem der vorhergehenden Ansprüche, wobei der Sensor einen Drucksensor beinhaltet.

9. Aussiebungsvorrichtung gemäß einem der Ansprüche 1 bis 8, wobei der Sensor einen kapazitiven Sensor beinhaltet.

10. Aussiebungsvorrichtung gemäß einem der Ansprüche 1 bis 9, wobei der Sensor einen optischen Sensor beinhaltet.

11. Aussiebungsvorrichtung gemäß einem der vorhergehenden Ansprüche, wobei das Siebelement ein kreisförmiges Sieb beinhaltet.

12. Ein Verfahren zum Steuern einer Siebkomponente, die zum Zweck des Rückhaltens von Feststoffen verwendet wird, während der Durchgang einer Flüssigkeit durch die Siebkomponente gestattet wird, beinhaltend das Steuern der Siebkomponente mittels einer elektrischen Steuereinheit, um die Bewegung der Siebkomponente zwischen entgegengesetzten 180-Grad-Stellungen zu steuern, die eine Rückhaltestellung, in der Feststoffe oder Objekte durch die Siebkomponente aufgehalten werden, und eine Freisetzungsstellung, in der Feststoffe oder Objekte durch die Siebkomponente freigesetzt werden, umfassen, das Bereitstellen eines Rohrleitungssystems von dem Sieb zu alternierenden getrennten Stellen, die eine Auslassstelle und eine Sammelstelle umfassen, das Erkennen einer Störbedingung stromaufwärts der Siebkomponente, um abhängig davon, ob stromaufwärts eine Störung vorliegt oder nicht, entweder ein Störungssignal oder ein Keine-Störung-Signal bereitzustellen, wobei die elektrische Steuereinheit auf die erkannte Störbedingung reagiert, um eines von Folgendem durchzuführen:
i) Verbinden der Siebkomponente in der Freisetzungsstellung über das Rohrleitungssystem und ein erstes Ventil, das stromabwärts der Siebkomponente angeordnet ist und eine offene und eine geschlossene Stellung aufweist, mit der Sammelstelle, wobei ein an der Siebkomponente angeordneter Sensor die Anwesenheit von Feststoffen oder Objekten an der Siebkomponente nach der Bewegung der Siebkomponente in die Freisetzungsstellung erkennt, und Steuern des ersten Ventils von der elektrischen Steuereinheit, um als Reaktion auf das Störungssignal Feststoffe oder Objekte zu der Sammelstelle zu lenken, und Verbinden der Siebkomponente in der Freisetzungsstellung über das Rohrleitungssystem und ein zweites Ventil, das stromabwärts der Siebkomponente angeordnet ist und eine offene und eine geschlossene Stellung aufweist, und
ii) Steuern des zweiten Ventils von der elektrischen Steuereinheit, um als Reaktion auf das Keine-Störung-Signal einen Fluss zu der Auslassstelle zu lenken.

## Revendications

1. Un appareil de criblage comprenant un élément formant filtre (14) disposé dans un système de tuyauterie (11, 17) et utilisé dans le but de retenir de la matière particulaire tout en laissant passer un liquide à travers l'élément formant filtre, **caractérisé en ce que** l'appareil comprend une structure de support pour l'élément formant filtre afin de permettre une rotation de l'élément formant filtre au sein de la structure de support entre des positions opposées à 180 degrés, un organe de contrôle (24) comprenant un contrôleur électrique couplé avec l'élément formant filtre pour contrôler la rotation de l'élément formant filtre entre les positions opposées à 180 degrés, ledit élément formant filtre entravant, dans les deux positions opposées à 180 degrés de celui-ci, toute matière particulaire tout en laissant passer un liquide, ledit organe de contrôle ayant un premier état dans lequel une rotation de l'élément formant filtre est contrôlée afin de faire tourner l'élément formant filtre entre lesdites positions opposées à 180 degrés et un deuxième état dans lequel une rotation de l'élément formant filtre est interdite, où la structure de support inclut un cadre (40), et l'élément formant filtre inclut un organe formant filtre (42) monté dans le cadre ; et un arbre (44) pour supporter l'organe formant filtre relativement au cadre ; où ledit organe de contrôle a un premier état afin de retenir de la matière particulaire au niveau de l'organe formant filtre et un deuxième état pour libérer de la matière particulaire de l'organe formant filtre ; un dispositif de traitement amont (12) disposé en amont de l'élément formant filtre et qui génère un signal d'anomalie représentatif de l'existence d'un matériau source d'anomalie ; et un capteur (60) disposé au niveau de l'élément formant filtre pour capter la présence de matière particulaire ou d'objets au niveau de l'élément formant filtre après déplacement de l'élément formant filtre jusqu'à la position de libération, et un moyen formant valve de contrôle (16, 18) disposé en aval dudit élément formant filtre contrôlé à partir dudit organe de contrôle, ledit moyen formant valve de contrôle inclut une première valve (16) disposée en aval dudit élément formant filtre, contrôlée à partir dudit contrôleur électrique et raccordant l'élément formant filtre à un site d'évacuation ; et une deuxième valve (18) disposée en aval dudit élément formant filtre, contrôlée à partir dudit contrôleur électrique et raccordant l'élément formant filtre à un site de collecte où ladite première valve est ouverte dans le premier état en l'absence du signal d'anomalie afin de contrôler le transport de matière particulaire jusqu'au site d'évacuation et ladite deuxième valve est ouverte dans le deuxième état en présence du signal d'anomalie afin de contrôler le transport de matière particulaire jusqu'au site de collecte.

2. L'appareil de criblage de la revendication 1 où l'organe de contrôle comprend un contrôleur électrique qui inclut soit un temporisateur, soit un capteur de pression.

3. L'appareil de criblage de la revendication 2 où le contrôleur électrique inclut en sus un circuit logique pour contrôler les première et deuxième valves de manière mutuellement exclusive.

4. L'appareil de criblage de la revendication 3 où le contrôleur électrique inclut en sus des portes logiques.

5. L'appareil de criblage de la revendication 1 et de n'importe lesquelles des revendications 2 à 4 lorsqu'elles dépendent de la revendication 1 où le contrôleur électrique inclut soit un temporisateur pour régler une période de rotation prédéterminée dans le premier état, soit un capteur de pression pour régler une période de rotation prédéterminée dans le premier état.

6. L'appareil de criblage de n'importe quelle revendication précédente où l'élément formant filtre s'étend dans un plan et est raccordé entre des sections de tuyauterie adjacentes du système de tuyauterie, ledit élément formant filtre pouvant être déplacé entre une première position de celui-ci dans laquelle le plan d'élément formant filtre s'étend de manière substantiellement orthogonale à un axe longitudinal de système de tuyauterie afin de retenir de la matière particulaire, et une deuxième position, dans laquelle le plan d'élément formant filtre est déplacé dans une direction de l'axe longitudinal du système de tuyauterie de manière à ce que le plan d'élément formant filtre soit disposé hors du plan orthogonal de manière à libérer toute matière particulaire retenue dans une des sections de tuyauterie adjacentes.

7. L'appareil de criblage de n'importe quelle revendication précédente incluant un contrôleur couplé avec l'élément formant filtre pour contrôler le déplacement de l'élément formant filtre relativement à la structure de support et sensible au capteur et au signal d'anomalie pour générer une condition d'alerte si des objets ou de la matière particulaire sont toujours détectés par le capteur après que l'organe formant filtre a effectué une transition jusqu'à une position de libération.

8. L'appareil de criblage de n'importe quelle revendication précédente où le capteur comprend un capteur de pression.

9. L'appareil de criblage de n'importe lesquelles des revendications 1 à 8 où le capteur comprend un capteur capacitif.

10. L'appareil de criblage de n'importe lesquelles des revendications 1 à 9 où le capteur comprend un capteur optique.

11. L'appareil de criblage de n'importe quelle revendication précédente où l'organe formant filtre comprend un filtre circulaire.

12. Un procédé de contrôle d'un élément formant filtre qui est utilisé dans le but de retenir de la matière particulaire tout en laissant passer un liquide à travers l'élément formant filtre, comprenant le fait de contrôler l'élément formant filtre au moyen d'un contrôleur électrique, de manière à contrôler le déplacement de l'élément formant filtre entre des positions opposées à 180 degrés incluant une position de retenue dans laquelle de la matière particulaire ou des objets sont entravés par l'élément formant filtre et une position de libération dans laquelle de la matière particulaire ou des objets sont libérés à travers l'élément formant filtre, le fait de fournir un système de tuyauterie allant du filtre jusqu'à des sites distincts alternatifs incluant un site d'évacuation et un site de collecte, le fait de capter une condition d'anomalie en amont de l'élément formant filtre afin de fournir soit un signal d'anomalie, soit un signal de non anomalie selon qu'il y a ou non une anomalie en amont, ledit contrôleur électrique étant sensible à la condition d'anomalie captée afin de réaliser soit
i) l'opération de raccorder l'élément formant filtre dans la position de libération via le système de tuyauterie et une première valve disposée en aval dudit élément formant filtre et ayant une position ouverte et fermée au site de collecte, avec un capteur disposé au niveau de l'élément formant filtre captant la présence de matière particulaire ou d'objets au niveau de l'élément formant filtre après déplacement de l'élément formant filtre jusqu'à la position de libération, et de contrôler la première valve à partir du contrôleur électrique afin de diriger de la matière particulaire ou des objets vers le site de collecte en réponse au signal d'anomalie, et de raccorder l'élément formant filtre dans la position de libération via le système de tuyauterie et une deuxième valve disposée en aval dudit élément formant filtre et ayant des positions ouverte et fermée, soit
ii) l'opération de contrôler la deuxième valve à partir du contrôleur électrique afin de diriger un écoulement jusqu'au site d'évacuation en réponse au signal de non anomalie.
